# EUROPEAN PATENT SPECIFICATION

(11) **EP 0 800 355 B1**
(45) Date of publication and mention of the grant of the patent: **20.08.2003**
(21) Application number: 96903393.5
(22) Date of filing: 03.01.1996
(51) Int. Cl.: A47C 1/00

(54) **EXPANDED FOAM PRODUCTS AND METHODS FOR PRODUCING THE SAME**
EXPANSIONSSCHAUMPRODUKTE UND METHODE ZU IHRER HERSTELLUNG
ARTICLES EN MOUSSE EXPANSEE ET PROCEDES POUR LES PRODUIRE

(30) Priority: 05.01.1995 US 369138; 15.08.1995 US 2666
(43) Date of publication of application: 15.10.1997
(73) Proprietor: Cascade Designs, Inc., Seattle, Wa. 98134 (US)
(72) Inventor: LEA, James, M., Seattle, WA 98177 (US); HAGGERTY, Peter, D., Mercer Island, WA 98040 (US); ANDLER, Richard, C., Seattle, WA 98177 (US); MARSON, James, E., Seattle, WA 98125 (US)
(74) Representative: Leson, Thomas Johannes Alois, Dipl.-Ing.
(86) International application number: US9600273
(87) International publication number: WO96021378

(56) References cited:
- EP-A- 0 255 301
- DE-U- 1 727 445
- US-A- 4 879 776
- US-A- 5 007 124

## Description

### Field of the Invention:

The present invention pertains to expanded foam products and methods for making the same, and more particularly, to foam products derived from a solid slab of foam having a plurality of slits formed therein and which are capable of providing an expanded state to thereby alter the effective IFD and density values thereof.

### Background of the Invention:

It is well known in the field of cushioning that comfort and support are determined in large part by the amount and characteristics of the supporting material. Cushioning characteristics or the IFD value of a foam material is derived by measuring the force required to reduce the thickness of a 15" (38.1cm) x 15" (38.1) x 4" (10.16cm) polyurethane foam sample by 25% when depressing an 8 inch (20.32cm) diameter disk having a surface area of approximately 50 in² (322.58cm²) thereinto. Thus, an IFD value of 40 means that 40 pounds (11.6 bar) of force on a 50 in² (322.58cm²) disc is required to decrease an established foam sample's thickness by 25%. See ASTM D3574-91. The IFD value can be affected by inherent properties such as the material's chemical composition, physical structure, and density or by post manufacture structural manipulation such as the removal or addition of adjuncts.

Current technologies and manufacturing restrictions prevent the reliable production of blown foam products having an IFD value of less than about 12 pounds (3.48 bar). Regarding this limitation, a common solution has been to "core" the foam product to create collapsible voids therein. For example, a foam slab is cored to remove foam to thereby decrease its overall weight and decrease its overall effective IFD value. A significant consequence of this weight and IFD reducing methodology is the generation of unused and often times unwanted foam material resulting from the coring process. It is therefore desirable to reduce and preferably eliminate the generation of this waste material. In addition, the coring process can be labor intensive compared to other processes such as slicing, stamping, or molding.

The German patent DE 17 27 445 discloses an expanded resilient product comprising a plurality of slits which are formed in a resilient material wherein the material is expanded to create a plurality of gaps or apertures. Unless the material is bonded to a substrate while in the expanded state, the gaps of this design will close in response to the resilient material's elastic propensity and lack of inherent stabilization to maintain its new form.

It is therefore desirable to-provide a resilient material for use, for example, in self-inflating mattresses, which is light, retains appropriate tensile strength properties, achieves acceptable self-inflation properties, and is generally easy to incorporate into such mattresses, and which does not generate any waste by-product.

### SUMMARY OF THE INVENTION

The present invention is directed to methods of manufacturing reduced density resilient materials and products obtained thereby. A common feature of all method embodiments is that a resilient material is made lighter through mechanical alteration but involves virtually no generation of wasted resilient material. Methods to produce a reduced density, resilient structure are characterized by selectively forming a cut or slice in a slab of resilient material from one perimeter surface towards an opposing perimeter surface (although is it not necessary to have the cut or slit extend therethrough), expanding the cut or sliced material by applying tensioning to the material, and retaining the expanded state either by fixedly attaching the expanded material to at least one sheet of flexible material or by utilizing a slit design that is characterized by a first inner surface having at least one protruding portion forming an interlocking or mating fit with an opposite and complementary recess formed by a second inner surface. Products resulting from execution of the aforementioned methods are less dense than would be accomplished using just the resilient material without mechanical manipulation, retain most of the desirable qualities associated with use of a non-altered- resilient material, and involve no generation of waste material.

In one embodiment, cuts are made in a slab of resilient material having two opposing and substantially planar major surfaces and a two major and two minor perimeter surfaces. The cuts extend from one perimeter surface to the opposing perimeter surface (preferably the minor perimeter surfaces) and depend from one of the two planar major surfaces but do not extend to the second major planar surface thereby yielding a staggered siped pattern of slits. Upon tensioning of the major perimeter surfaces in opposite directions, the slab extends to create an accordion or corrugated like structure. While the structure is in this configuration, at least one sheet of flexible material is bonded to the structure's major surface which assists in retaining the physical attributes of the expanded structure. Preferably a second sheet of flexible material is bonded to the opposing major surface and the perimeter of the sheets also bonded together, thereby enveloping the slab. If it is desired to envelope the resilient material in this manner, the flexible sheets should be, but not must be, impervious to fluid/air. By incorporating a valve extending from the chamber defined by the sheets to the environment, control over the fluid pressure in the chamber can be regulated.

Variations of the basic invention include modifying the geometry, placement, and number of the slits, and manipulating an unslit slab to create a corrugated geometry. For example, extending perimeter cuts can be made into a slab of resilient material to yield two complimentary slabs characterized as having a web portion and a plurality of extending portions defining transverse or longitudinal channel of several geometries. The resulting complimentary slabs can be incorporated into a mattress as described above, or can be modified by isolating each channel segment, such as by slicing the material from the extending portion through the base portion, to produce a plurality of channel prisms. The channel prisms may then be aligned and bonded to a pair of fluid impervious sheets to enclose the channels and thereby define a void. In this form, the slab resembles one that has been cored, yet again, no waste material has been generated.

In another embodiment, the physical properties of the resilient material are not changed, however its geometry is modified by manipulating the slab into a sinusoidal pattern wherein the slab peaks collectively define a first and second planar surface. Fluid impervious sheets may then be attached to the peaks and their perimeters sealed to produce an enclosed structure. By using a valve fluidly coupling the chamber defined by the sheets and occupied by the resilient, corrugated slab with the environment, a self-inflating structure can be obtained.

In yet another embodiment, a first and second slit convergently depend from an arbitrary location on the major surface of a resilient slab. The slits extend from one perimeter surface to the opposing perimeter surface but do not in fact converge within the body of the slab. A second pair of slits, divergently depend from the opposing major surface and are spaced from and parallel to the first slits. All slits are linearly symmetrical. Similar cuts are made in the remaining material.

Force is then applied to the resulting structure to cause extension of the material in a direction substantially perpendicular to the major planar surfaces. At this juncture, fluid impervious skins may be bonded to the major planar surfaces, or additional force can be applied whereupon the structure laterally contracts, thereby causing the major planar surfaces to become coextensive again. However, a plurality of lateral or transverse voids are created, thereby approximating the insulative values of a cored slab, but without generating waste material in the process.

In the foregoing embodiments, it was necessary to retain the expanded form by bonding the expanded slab to at least one flexible material. In a variation of the invention, a reduced density resilient product is formed by the selective slitting of a geometric solid of resilient material wherein each slit is defined by a first inner surface having at least one protruding portion forming an interlocking or mating fit with an opposite and complementary recess formed by a second inner surface. The reduction in density occurs when the slit is expanded by, for example, the application of forces sufficient to overcome the interlocking fit between the two inner surfaces and to dislodge the protruding portion from the complementary recess. The aperture or gap formed as a consequence of this dislodgement is advantageously self-sustaining due to the resistance of the protruding portion of the first inner surface from re-engaging with the complementary recess of the second inner surface.

A method for manufacturing the described self-sustaining expanded product comprises the steps of creating a plurality of slits in a geometric solid of resilient material wherein each slit is defined by a protruding portion on a first inner surface of the resilient material and interlocks with an opposite and complementary recess defined by a second inner surface of the resilient material; applying force to the material so as to dislodge at least one protruding portion from its complementary recess; and permitting the protruding portion to compressionally contact the second surface to thereby define a self-sustaining gap.

The foregoing modification of a solid resilient material to create self-sustaining apertures or gaps is possible in part because of the nature of resilient material. It is the ability of the protruding portion and complementary recess of the material to first, deform and dislodge or separate from each other when sufficient forces are presented, second, return to their original shape thereafter, and third, resist re-interlocking either because of friction forces or physical interference that permits the creation and maintenance of self-sustaining apertures or gaps in the resilient material without requiring coring or generating waste material in order to reduce density and IFD values. With proper selection of the slitting configuration and the initial dimensions of the slab of resilient material, a larger self-sustaining slab of the desired dimensions and density, or IFD, can be manufactured repeatedly for use in uniformly sized final products. In addition, the types of interlocking patterns that can be used are virtually unlimited. However, because each pattern has its unique attributes, one pattern may not be suitable for all applications.

From the foregoing, it can be seen that the effective density and IFD values for any given resilient material can be modified without incurring any material waste. The effective density and IFD values of a resilient material can be decreased more by creating more slits, longer slits, or longer protruding portions. In this manner, the initial IFD value of a resilient material can be modified to create "softer" material. The shape of the slits, amount of distortion when expanded, and aspect ratio of the open spaces are all significant to the characteristics of the processed resilient material and its performance in the finished product.

In preferred form for the self-sustaining expanded embodiment, a slab of open cell foam is used and the slits are staggered so that a first row of slits is offset from a second and subsequent even rows of slits, but aligned with a third and subsequent odd rows. This alternating pattern permits sufficient extension of the foam to allow the protruding portion to dislodge from the complementary recess portion without causing undesirable distortion of the material.

A feature of this embodiment is the slit slab's ability to physically distort in response to compression forces, thereby causing the webs defining the apertures or gaps to collapse. When the slit slab is used for load support, compressional forces are usually applied in a direction parallel to the slit axis so as to capitalize on the column strength created by the webs. However, when the maximum load supporting force is exceeded, the web advantageously buckles and causes the aperture or gap to close when the column buckles in embodiments having sufficient sectional thickness and web dimensions. By permitting such closure, thermal convection that otherwise might be significant, is lessened by the closure of the apertures or gaps. In the field of mattresses and the like, where thermal transmission is an important factor, the ability to have a foam slab of very low IFD, yet to have high insulating values when in use, is of particular benefit.

Another feature of the invention concerns the manipulation of the slab itself into differing configurations. For example, an expanded slab having a proportionally small perimeter height can be circumvoluted to bring opposing perimeter segments into contact with one another to thereby form a cylinder of expanded material. Such a configuration can be used for insulating pipe, conduits, and the like, either alone or in combination with covering materials that surround the central bore and/or the outer perimeter of the cylinder. Conversely, a slab having a proportionally large perimeter can be put on end so as to receive compressional loading in a direction substantially aligned with the major direction of the slits to provide different IFD values.

The present invention is especially suited for use in the construction of self-inflating foam mattresses wherein light weight, low density, reasonable tensile strength, and compactibility are highly desirable. By bonding a fluid impervious skin to and about a slab of expanded resilient material, a lighter weight inflatable mattress can be created that still exhibits sufficient compressional resiliency to provide self-inflating characteristics. Moreover, use of the present invention in its various embodiments does not significantly decrease the foam's ability to act as a tensile member as required in order to maintain the load distribution and volume characteristics necessary for such self-inflating foam filled mattresses.

These and other features of the invention will become apparent upon reading the description of the invention and inspection of the accompanying drawings as well as the appended claims.

### BRIEF DESCRIPTION OF THE DRAWINGS

Fig. 1 is a partial elevation view of a foam slab through which narrow straight slits have been cut;
Fig. 2 is similar to the slab in Fig. 1, but wherein the foam has been expanded by extending the slab in a direction perpendicular to the slit orientation;
Fig. 3 is cut-away perspective view of the slab shown in Fig. 2 wherein two fluid impervious sheets have been bonded to the slab;
Fig. 4 is a partial elevation view of a thin foam slab that has been formed into a corrugated shape with sheets bonded to portions of both major surfaces;
Fig. 5 is a cross section elevation view of an apparatus used to form the article illustrated in Fig. 4;
Fig. 6 is a cross section elevation of the thin foam stab of Fig. 4 shown formed in a mandrel rack and bonding to a first of two fluid impervious sheets;
Fig. 7 is similar to Fig. 6 but wherein the mandrel rack has been removed and the second fluid impervious sheet bonded to the slab;
Fig. 8 is a partial elevation view similar to that shown in Fig. 4, but wherein the foam slab has been formed into a pattern to enclose triangular shaped voids;
Fig. 9 is an elevation view of a foam slab showing regular channels formed therein;
Fig. 10 is an elevation view of a thick foam slab from which two slabs similar to the type shown in Fig. 9 can be created;
Fig. 11 is an elevation view of a foam slab showing "T" shaped channels formed therein;
Fig. 12 is an elevation view of a segmented core embodiment wherein a plurality of "U" shaped segments are adjacently located and two flexible sheet are bonded thereto;
Fig. 13 is an elevation view of the a slit pattern used to produce two, complimentary slabs from a single slab;
Fig. 14, an elevation view, shows the segmentation of one of the slabs of Fig. 13 into a plurality of "U" shaped segments;
Fig. 15 illustrates the slit pattern, in elevation, in a slab of foam to produce a vertically expanded foam core;
Figs. 16, 17, and 18 show the resulting configuration when the slab of Fig. 15 is partially and fully extended vertically by selective application of forces perpendicular to the major surfaces;
Fig. 19 is a plan view of a slab of foam material having an alternating stagger pattern of unexpanded self-sustaining slits;
Fig. 19A is an enlarged perspective view of several self-sustaining slits of Fig. 19 and details the various portions of the same in phantom;
Fig. 20 shows the slab of Fig. 19 after having been laterally expanded to dislodge substantially all protrusions from their corresponding recesses and then released to allow the protrusions to interfere with the edges of the recesses to hold the gaps open;
Fig. 20A is an enlarged perspective view of several self-sustaining apertures or gaps of Fig. 20 and details the various portions of the same in phantom;
Fig. 21 is a side elevation of the slab illustrated in Fig. 20;
Fig. 21A is similar to Fig. 21 but shows the slab being subject to a distributed compressive force so that the webs defining the apertures or gaps collapse the same;
Fig. 22 is a plan view of a stamping die that may be used in creating the self-sustaining gap embodiment of the present invention;
Fig. 23 shows a partial perspective view of an embodiment of the invention wherein a modified slab is oriented so as to accept compressive forces in a direction substantially aligned with the major axis of the slits;
Fig. 24 shows the foam slab of Fig. 20 in a circumvoluted state so as to create a cylinder;
Figs. 25A - G illustrate several examples of die elements which create a physical interlock between the protruding portion of the first inner surface and the complementary recess portion of the second inner surface upon compressive application to an unslit foam slab;
Figs. 26A - B illustrate several embodiments of the invention that utilize a tether to connect the protruding portion with the receiving portion to thereby limit expansion, improve uniformity of the gaps, and increase the expanded slabs stability;
Fig. 27A is a side elevation similar to Fig. 21, except that the gaps do not extend from one surface to an opposing surface, but instead, terminate in the body;
Fig. 27B is an embodiment similar to that shown in Fig. 27A, but wherein the gaps are formed only on one side;
Fig. 27C illustrates a resulting product similar to that of Fig. 27B, but which is formed by combining a fully slit and a non-slit slab;
Fig. 27D illustrates a plan view and partial cut-away of an embodiment combining aspects of the embodiment shown in Fig. 27C but wherein two primary slit slabs are bonded together in an orthogonal relationship; and
Fig. 28 is a plan view with a partial cut-away showing an expanded foam slab used in a self-inflating, air mattress or pad wherein an air-impermeable skin is bonded to the upper and lower surfaces of the expanded slab and the perimeter is sealed except for an inflation/deflation valve.

### DESCRIPTION OF THE PREFERRED EMBODIMENTS

The following discussion relates to several embodiments of the present invention. Unless specifically described otherwise, all foam slabs have two major planar surfaces and a pair of major and a pair of minor perimeter surfaces. The slabs are preferably constructed from blown polyurethane having an initial IFD value of 15 pounds (4.35 bar). All flexible sheets are preferably woven and constructed from nylon, although any natural or synthetic polymer or material will provide adequate results, and have been treated on one side thereof with a thermoplastic coating to facilitate the bonding of a foam slab when the two components subjected to heat and pressure.

For comparison purposes, a solid foam, self-inflating mattress will be referred to as the reference mattress. The normalized attributes of the reference mattress are as follows: weight of a 12" x 12" x 1" (30.48cm x 30.48cm x 2.54cm) sample is 0.170 lbs. (77.11g); R value at 1" (2.54cm) is 3.871; R value of 1 lb. (0.4536kg) is 22.727.

### Staggered Siped Embodiment

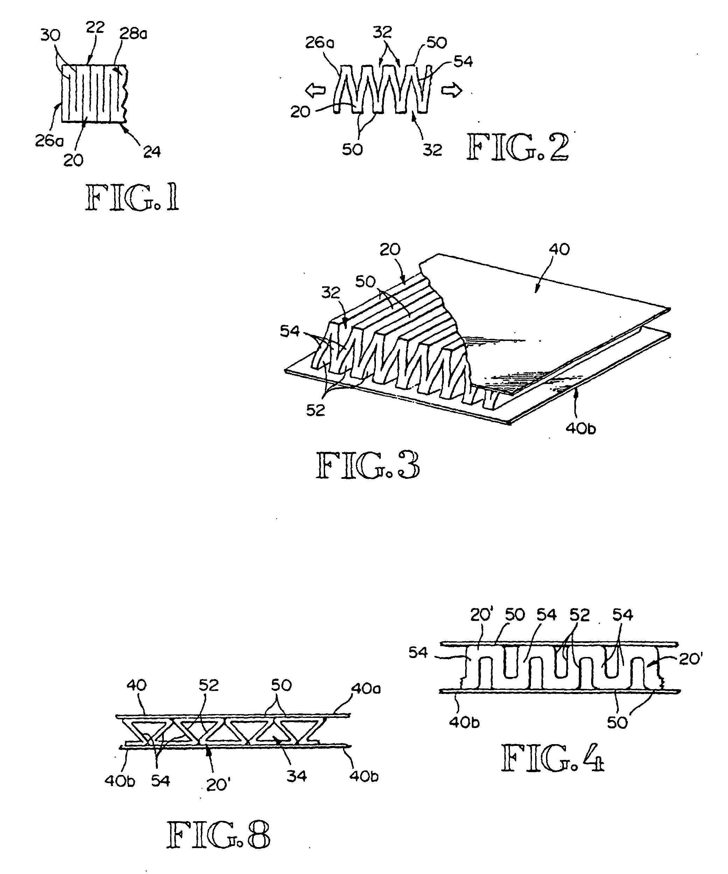

Turning now to the several figures wherein like parts have like reference numerals, a first embodiment is shown in Figures 1, 2, and 3. Figure 1 shows a uniformly thick slab of foam material 20 having upper major surface 22, lower major surface 24, perimeter major surface 26a, and perimeter minor surface 28a. Surfaces 26b and 28b are hidden from view and omitted for clarity. A plurality of straight, staggered slits 30 depend therein at regular intervals, alternately from major surface 22 and major surface 24. Slits 30 extend from perimeter surface 28a to 28b (not shown).

Figure 2 illustrates the physical structure resulting from application of force in the directions of the arrows, i.e., perpendicular to direction of slits 30. As a result, slits 30 are now expanded to form grooves 32. As a consequence of this expansion, slab 20 becomes wider and has less sectional thickness than before expansion. The degree of change in dimensions depends on the amount of force applied, and the frequency and depth of slits 30.

After expansion, slab 20 is then bonded or fastened to fluid impervious sheets 40a and 40b as is best shown in Fig. 3. Bonding surfaces 50 are beneficially all part of major surfaces 22 and 24. Consequently, any treatment of these surfaces to facilitate bonding of sheets 40a and 40b thereto will be retained. The attachment of sheets 40a and 40b to slab 20 ultimately limits and controls the stretch of slab 20.

In a preferred self-inflating mattress embodiment, slab 20 is expanded to approximately one and a half times its original width whereafter its density will have been reduced by approximately thirty-five percent (35%). A significant limitation concerning density reduction imposed on slab 20 is that tensile portions 54 of expanded slab 20 contribute less compressive resistance and tensile strength to the structure as the angle of tensile portion 54 relative to sheets 40a and 40b deviates from 90°. Thus, greater expansion will yield greater reductions in density, but will also decrease the desirable structural properties of the slab, such as tensile and compressional strength.

The article resulting from the 50% increase in width dimensions has been found to be an optimal balance between density reduction and burst strength/peal resistance. The embodiment shown has a weight reduction compared to the reference mattress of about 34%; a decrease in the R value for a 1" (2.54cm) core of about 36%; and a decrease in the R value for a 1 lb. (0.4536kg) core of about 3%.

A feature of this embodiment is that the amount of resilient material that exists between sheets 40a and 40b throughout the structure tends to be fairly constant, thus enhancing thermal insulation properties of the mattress. Several other embodiments discussed herein do not have this property.

### Corrugated Embodiment

Figure 4 illustrates a different embodiment wherein foam slab 20', having a cross sectional thickness less than that of slab 20, is formed into a sinusoidal or corrugated shape and bonded to sheets 40a and 40b. The corrugated slab has a plurality of bonding surfaces 50 that define two outer coplanar surfaces at the exterior apexes thereof. The apex to apex distance is uniform throughout. Flexible sheets 40a and 40b are attached or bonded to bonding surfaces 50 of corrugated slab 20' as described earlier. After bonding, sheets 40a and 40b prevent slab 20' from returning to its initial planar configuration.

The strength of an inflatable mattress having corrugated slab 20' therein is largely dependent upon the density of apexes, the angle of tensile portions 54 relative to sheets 40a and 40b, the tensile strength of the slab material comprising the slab, and the thickness of slab 20'. In the illustrated embodiment, tensile portions 54 are roughly perpendicular to sheets 40a and 40b. This geometry inherently provides a stronger structure than one with non-perpendicular tensile portions because the perpendicular portions experience minimal shear force when caused to tension.

In addition to good structural aspects, this type of mattress core compares well to the reference mattress: a weight savings of about 24% is realized; the R value for a 1" (2.54cm) section is decreased about 42%; and the R value for a 1 lb. (0.4536kg) core is decreased by approximately 25%.

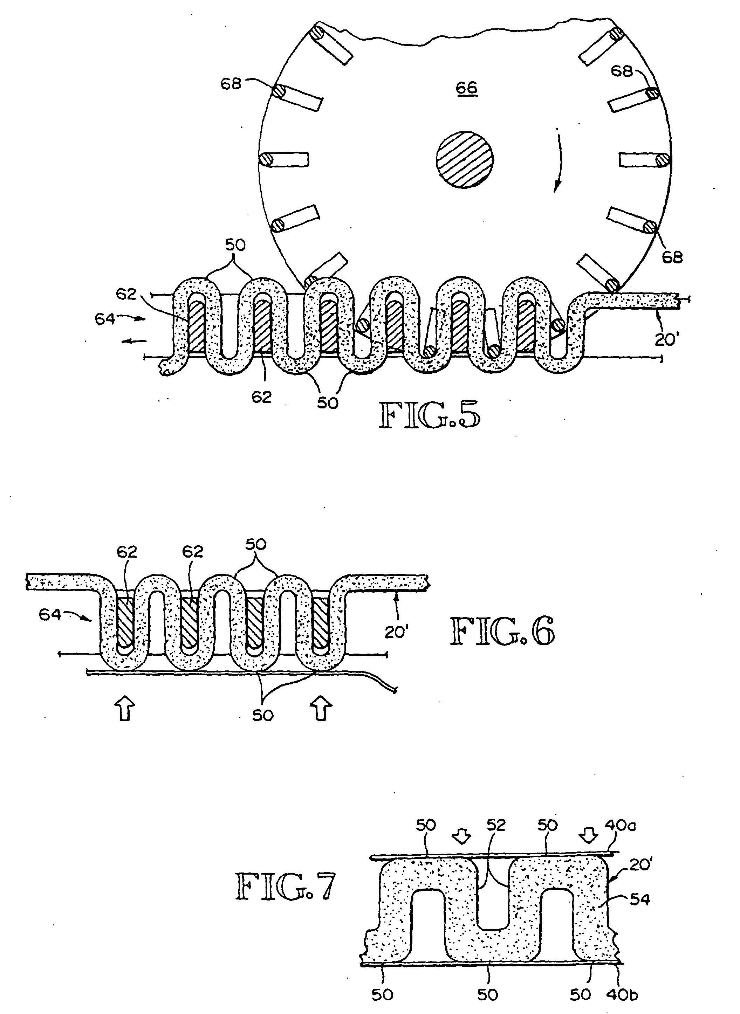

To efficiently manufacture the corrugated embodiment illustrated in Fig. 4, translatable mandrel rack 64 is used in conjunction with rotatable pinion drum 66 as is shown in Figs. 5, 6, and 7. Here, rods 68 of drum 66 are in a meshing, non-contacting relationship with mandrel members 65 of rack 64. Slab 20' is fed into the combination whereupon pinion rods 68 engage slab 20' and urge each foam segment between the gaps in mandrel rack 64 defined by members 65. Friction existing between each member 65 and non-bonding portion 52 prevents slab 20' from restoring to its original planar shape.

Once slab 20' is wholly engaged with rack 64, sheets 40a and 40b may then be bonded at bonding surfaces 50 which is best shown in Figs. 6 and 7. Briefly described, sheet 40b is bonded to lower bonding surface 50 while slab 20' is still present in rack 64. The rack is then removed and sheet 40a is subsequently bonded to slab 20'. The resulting product, shown in Fig. 7, can then have a valve (not shown) placed at a convenient location on the perimeter of the sheets whereafter the perimeter can then be sealed to create a self-inflating air mattress.

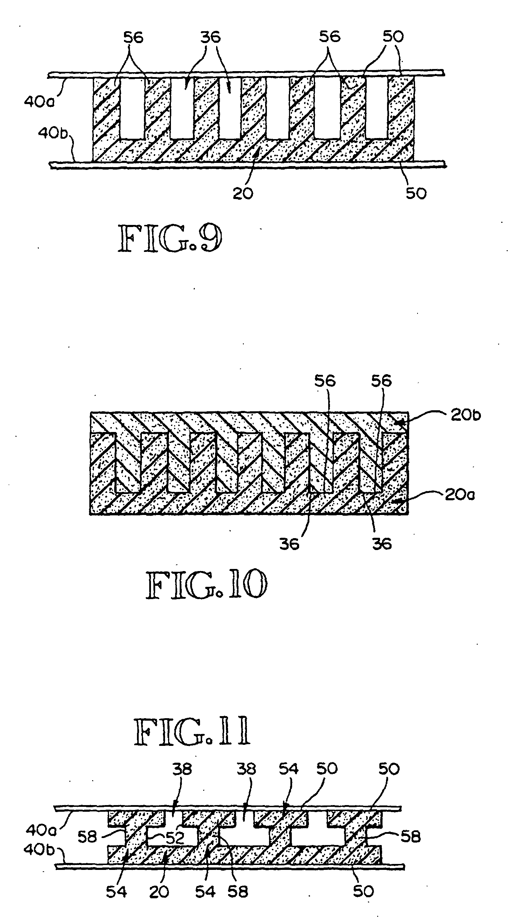

A modified corrugated embodiment is shown in Fig. 8 wherein foam slab 20' is bent to form a plurality of tubular voids 34 having a triangular cross section that extend through the slab. In this embodiment, the surface area of bonding surfaces 50 is increased to the extent that what were channels in the embodiment shown in Fig. 4 now become cylinders, thereby further decreasing thermal convection and approximating the thermal insulating values of a cored slab, yet without generating any waste by-product.

Because they are not perpendicular to sheets 40a and 40b, tensile portions 54 do not transmit loads efficiently between sheets 40a and 40b. While this configuration is not desirous, the advantage of this structure over many others described herein is that foam slab 20' is bonded or attached to sheets 40a and 40b over the entire structure surface. This bonding over the entire structure surface minimizes peal/shearing forces occurring at the interface of bonding surfaces 50 and sheets 40a and 40b.

### Two Slab Channel Embodiment Derived From Single Slab

Figure 9 shows another embodiment in which a uniformly thick resilient material slab 20 has a plurality of uniform rectangular cross section channels 36 formed therein. Because channels 36 have dimensions complimentary to extending portions 56, it is possible to generate two such slabs from a single slab without generating waste material. One machine that is often used for this purpose is a contour cutter. A contour cutter is typically a computer controlled band saw that is used to cut material in a variety of patterns. As illustrated in Fig. 10, two identical complementary slabs 20a and 20b are produced with one pass of the contour cutter blade. Channels 36 on slab 20a compliment extending portions 56 of slab 20b thereby reducing material loss and saving on fabrication cost.

Returning to Fig. 9, the depth of the channel 36 in relation to the total thickness of slab 20 determines the weight reduction. Satisfactory results have been obtained when the depth of channel 36 was equal to seven tenths of the overall thickness of slab 20. There are, however, strength limitations of such structures. When generally wider channels 36 are used, the maximum width of any channel 36 is determined by the peal strength of the bond between sheets 40a and 40b, and bonding surfaces 50. For narrower channels, the minimum width limitation is determined by the sizes of anomalies or voids that may naturally exist in the foam material. As the width of extending portions 56 approaches the size of possible anomalies, the resulting weakness of extending portion 56 limits the lower end of useful channel thicknesses.

Figure 11 shows a variation of the embodiment shown in Fig. 9. In this embodiment, slab 20 has a plurality of uniform channels 38 having a "T" cross section formed therein. Channels 38 are evenly spaced apart such that extending portions 56 have identical dimensions to complementary channels 38. As with the structure shown in Fig. 9, the material and process savings occur in the cutting of two slabs from a single larger slab and separating the cut slabs from each other.

The advantages of the T-shaped configuration in comparison to the simpler approach in Figs. 9 and 10 is that the T-shape has a greater bonding surface 50 to contact sheet 40a. This larger area of contact may serve to more firmly bond sheet 40a to slab 20, thereby reducing the potential for mattress failure due to pealing. Additionally, the greater bonding surface area decreases the area of channel exposure to the sheet, thereby increasing the insulative value associated with a mattress constructed in this fashion.

Use of "T" shape channels and extending portions also provides increased compression qualities. Many resilient materials when used in supporting cushions, pads, or mattresses, exhibit useful insulation properties in their uncompressed state. When used as a mattress, the insulation properties of the part of the structure undergoing compression where the user is resting is of interest. Often, the greater the compression of a mattress, the greater the loss of insulation properties. When a full width, unaltered slab of resilient material is used as a core for a mattress, the compression deforms the resilient material uniformly throughout the thickness of the mattress. Comparing such a mattress with one in which the resilient material is configured as slab 20 in Fig. 11, an interesting and useful benefit occurs. In Fig. 11, extending portions 56 include stem 58. As compressive loading of the cross section of slab 20 commences, the compression occurs first in stem 58 until it is nearly fully compressed. The remainder of the cross section remains unaffected. Further loading of the cross section results in compression of the material surrounding bonding surfaces 50 until it is fully compressed. This suggests that this structure, when used as a mattress, should have better thermal insulation properties than the conventional channel embodiment shown in Fig. 9. Testing has shown as much as a twenty percent improvement in insulation value of mattresses with T-shaped channels over mattresses with conventional, exposed channels.

### Segmented "U" Component Embodiment

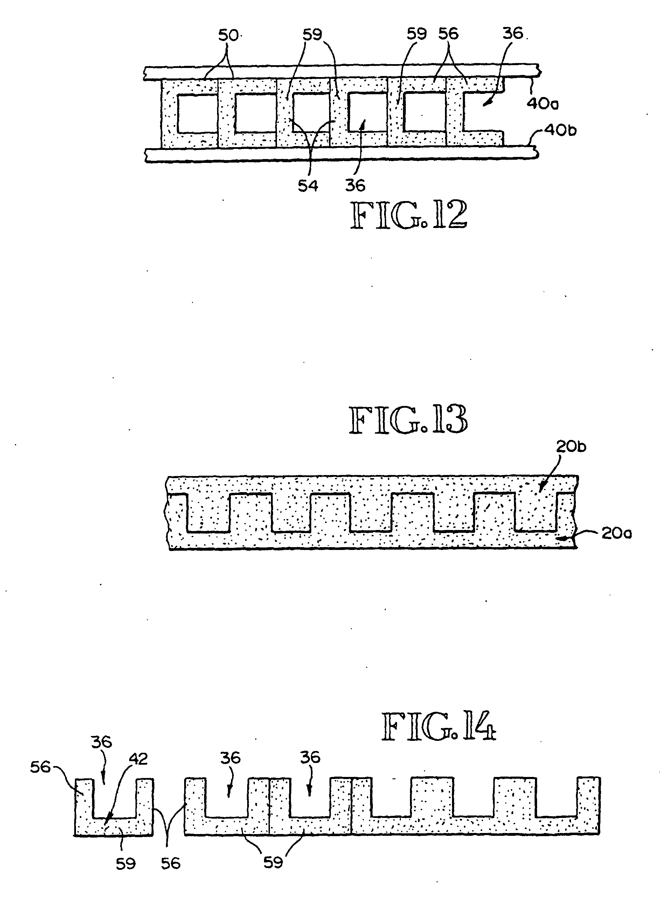

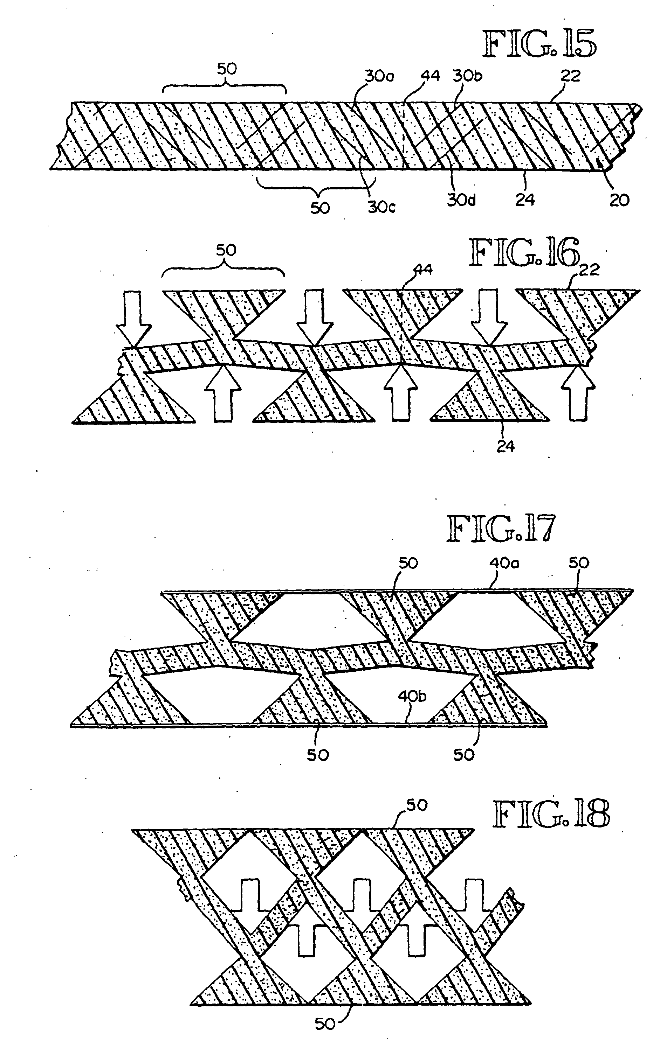

Yet another embodiment is shown in Fig. 12. This embodiment utilizes a slab created in much the same way as shown in Fig. 10 and segments each channel 36 at extending portions 56 to produce a plurality of identical U-shaped segments 42, as is shown in Figs. 12 and 14.

The segments 42 are then aligned so that extending portions 56 are congruent and in contact with web portion 59 of each adjacent segment 42. In this manner, each extending portion 56 defines bonding surfaces 50, and each web portion 59 becomes a tensile portion 54. U-shaped segments 42 may be bonded together, or may simply be removable contact with one another. As is shown best in Fig. 12, sheets 40a and 40b are bonded to bonding surfaces 50 of extending portions 56 and hold the assembly of U-shaped segments 42 together.

In an inflatable or self-inflatable mattress using this slab configuration, one advantage in comparison to the others mentioned is that the assembly of U-shaped segments 42 provides for complete foam to sheet bonding, with no exposed voids to facilitate peal failure. Another advantage of this embodiment is that web portions 59 are perpendicular to sheets 40a and 40b and thus, acting as tensile portions 54, will efficiently transmit forces from one side of the structure to the other.

### "Z" Siped Embodiment

Figures 15, 16, 17, and 18 show yet another embodiment in which a plurality of slits 30 are made into resilient slab 20. The configuration of the slits can be described in several different ways. Referring to Fig. 15, a first and second slit 30a and 30b convergently depend from an arbitrary location 44 on major surface 22 of slab 20. The slits extend from one perimeter surface to the opposing perimeter surface but do not in fact converge within the body of slab 20. A second pair of slits 30c and 30d, divergently depend from major surface 24 and are spaced from and parallel to slits 30a and 30b. All slits are linearly symmetrical about location 44. It has been found through experimentation that for a 1" (2.54cm) thick slab, slits 30a-d depend about 0.688 inches (1.7475cm) into slab 20 and slit pairs 30a and 30b, and 30c and 30d terminate their convergence at a minimum distance of about 0.500 inches (1.27cm) from one another. The parallel spacing between opposite slit pairs, i.e., 30a and 30c, and 30b and 30d is about 0.500 inches (1.27cm).

When selective forces are applied to stab 20 as best shown by the arrows in Fig. 16, slab 20 extends to assume the illustrated configuration. If slab 20 is then bonded to sheets 40a and 40b as shown in Fig. 17, only the vertical dimensions change significantly. However, if additional selective force is applied, the resulting configuration will resemble that shown in Fig. 18. In the expansion process, the original dimensions of slab 20 are changed. Not only does the thickness of slab 20 increase dramatically in the direction of extension, the dimensions in the axis perpendicular to extension noticeably lessens.

### Self-Sustaining Gap Embodiment

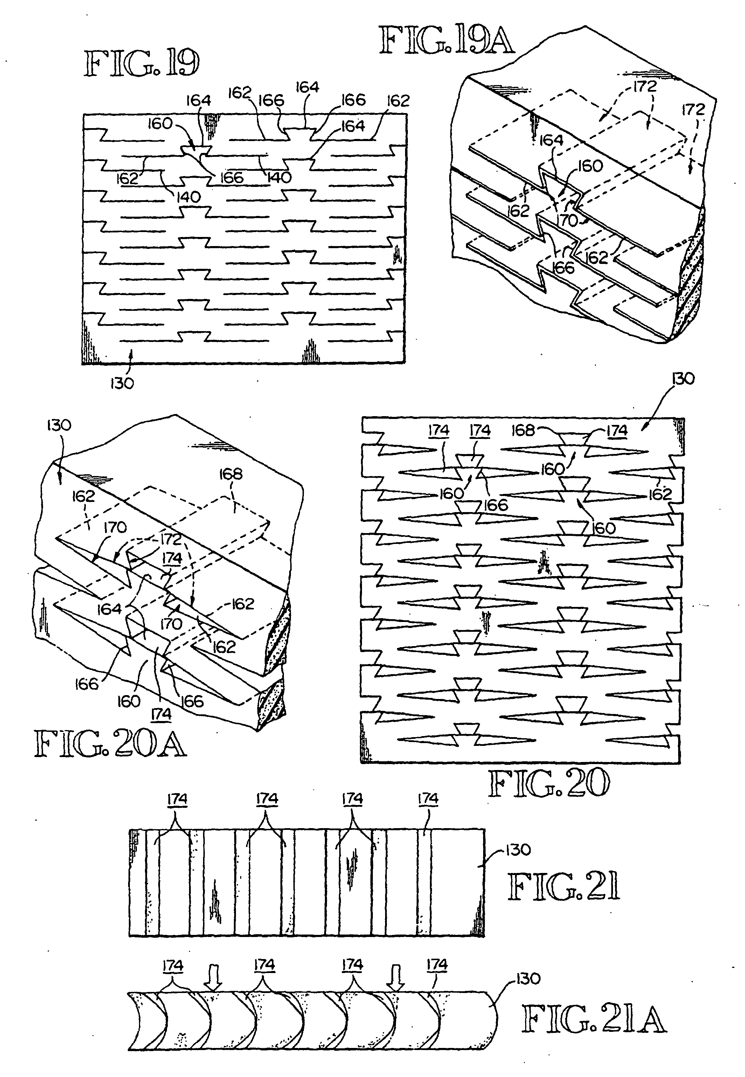

Turning now to Fig. 19, the self-sustaining embodiment according to the invention is shown in its unexpanded state. The invention is preferably derived from a single slab of open cell urethane foam 130 or other suitable lightweight and resilient material. To facilitate the creation of self-sustaining apertures or gaps, a plurality of slits 140 are formed in slab 130. As will be discussed later, the particular registry of slits 140 is not as important as the fact that each slit forms two surfaces generally normal to the major surfaces of slab 130. To aid in the discussion of the invention, the term longitudinal shall mean the direction which is substantially parallel to the predominant direction of the slits 40; the term lateral shall mean the direction which is substantially perpendicular to the predominant direction of the slits 140. Thus, in Fig. 19, longitudinal corresponds to the minor axis of the page while lateral corresponds to the major axis of the page.

A detailed, fragmentary perspective view of several slits 140 is shown in Fig. 19A. Slit 140 is defined by first surface 170, which in part includes protruding portion 160, and by second surface 172, which in part includes complementary receiving portion 168. In order for the invention to function properly, it is important that an interlocking or interfering fit be created between protruding portion 160 and complementary receiving portion 168. This interlocking fit is preferably physical (disengagement or engagement is accomplished by physical deformation of the foam); however, it may rely solely on friction. Protruding portion 160 has in its general form head portion 164, and stem or return portion 166 connecting head portion 164 and base portion 162. To achieve the previously mentioned physical interlocking fit, it is desirous to make head portion 164 dimensionally larger than stem or return portion 166.

Upon the application of generally opposing lateral force to slab 130, protruding portions 160 disengage from receiving portions 168 because of the resilient nature of slab 130, as shown in Fig. 20. While lateral forces are the most efficient, any force applied to slab 130 which results in the dislodgement of protruding portion 160 from complementary receiving portion 168 is suitable. After the lateral force has been removed, head portion 164 of each protruding portion 160 is brought to bear against base portion 162 of complementary receiving portion 168 as is also shown in greater detail in Fig. 20A. Because the resilient restoring force of the foam material used to create slab 130 is less than the force required to refit protruding portion 160 into complementary receiving portion 168, aperture or gap 174 is self-sustaining. Using the type and dimensions of slits 140 shown in Fig. 19, an approximately 30% increase in area and 30% decrease in density is achieved. In addition, the IFD is similarly reduced by approximately 30%.

It is, of course, possible to vary the degree of slab expansion by increasing or decreasing the lateral length of each stem or return portion 166, the characteristics of head portion 164, or the longitudinal length of slit 140. In addition, variation of the location and spacing of slits 140 also will affect the degree and nature of apertures or gaps formed after application of lateral displacing forces. These aspects of the invention will be discussed in greater detail below.

The elevation view of slab 130, which is shown in Fig. 21, illustrates that the apertures or gaps 174 transverse the section of slab 130 to create passages extending from one major surface to the other. However, because these passages represent only approximately 30% of the total surface area, the load bearing capacity of slab 130 remains high. Nevertheless, if sufficient loading is presented to a major surface (assuming that the opposite major surface is supported in a planar manner), the column strength associated with the slab webs is exceeded and the passages will collapse as shown in Fig. 21A. This feature of the invention is of considerable importance. when the expanded slab is used in applications wherein heat transmission or convection is a design factor.

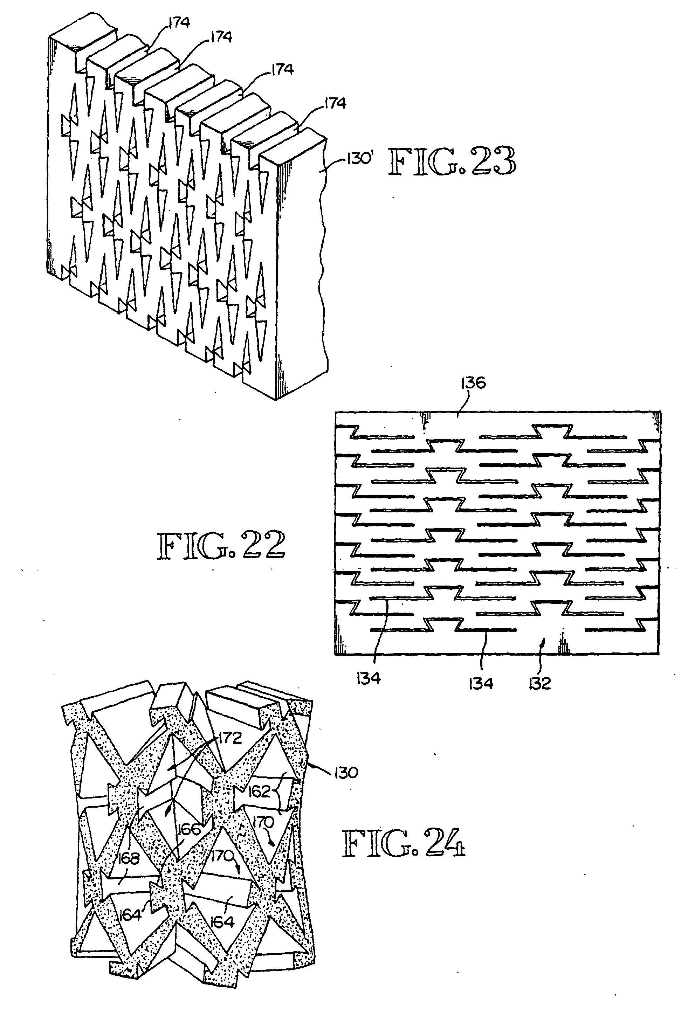

In order to manufacture the reduced density resilient product, one need only choose an appropriate slit design and pattern (slit design and pattern choice will be discussed in detail below). After making these choices, an appropriate means for forming the slits in the slab must be chosen. A preferred method for creating slits in a slab of resilient material is to subject an unslitted slab of resilient material to compressive cutting elements. Either a stamping die such as shown in Fig. 22 or a rotary die cutting drum can be used. The stamping die of Fig. 22 has a plurality of cutting elements 134 arranged in the same pattern as desired to appear on a processed slab. For cuts in 1.5 inch (3.81cm) thick foam having a low initial IFD, each cutting element 134 has a height of approximately 0.125 to 0.5 inches (0.3175 to 1.27cm). Other means for creating the slit pattern in a slab include melting, water cutting, laser cutting, and knife cutting.

The orientation of a slit slab 130 depends largely on the application chosen. For example, it is possible to orient slab 130 on its edge so as to receive compressive loads edge-wise or in the longitudinal direction. Due to the direction of the slit cut, longitudinal compressive loads will cause significant longitudinal collapse of slab 130 by permitting lateral bulging. In this configuration, a significant reduction in IFD can be achieved without resorting to material removal processes. As best shown in Fig. 23, resilient foam material 130' having the aforementioned properties can be created using one or more of the previously described slitting or cutting processes.

An alternative use for the present invention is shown in Fig. 24, wherein the slab of Fig. 19 is circumvoluted and the proximate perimeter ends are secured so as to form a cylindrical body having an open core. This embodiment of the invention can be used as insulation for pipes and the like either alone or in combination with an inner and/or outer covering. The embodiment can also be used as lightweight packing or sound insulation material.

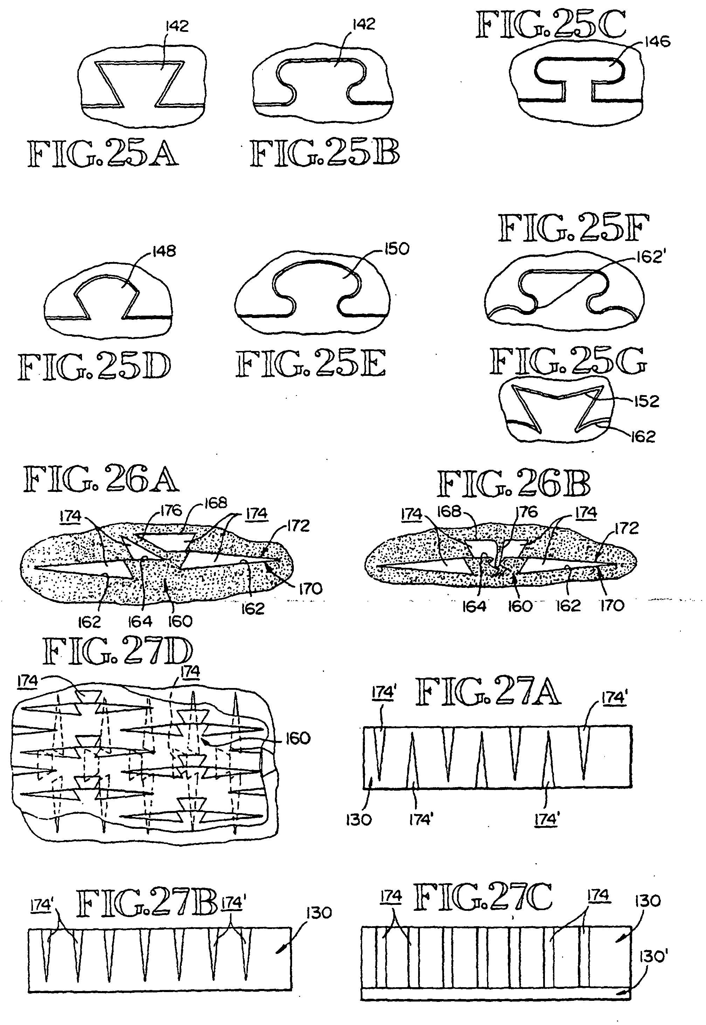

As discussed previously, a critical concept of the invention is the interlocking fit between the protruding portion and the complementary receiving portion of the slab after formation of the slit in order to create the self-sustaining gaps or apertures that result upon the application and cessation of generally opposing lateral forces. To illustrate the diversity of possible shapes of such protruding portions, attention is drawn to Figs. 25A - 25G.

In Fig. 25A, an inverted triangular frustum protruding portion 142 is shown. Head portion 164 is linear, and stem or return portion 166 linearly tapers to base portion 162. Goblet shaped protruding portion 144 in Fig. 25B also has a linear head portion 164, but utilizes a curved stem or return portion 166. Tee shaped protruding portion 146, which is shown in Fig. 25C, emphasizes an extreme interlock configuration. Scallop shaped protruding portion 148 in Fig. 25D illustrates that head portion 164 may assume a convex or dome shape. Similarly, head portion 164 of capstan shaped protruding portion 150 of Fig. 25E shows that a convex or dome shaped head portion 164 may be used with a curved stem or return portion 166. Base portion 162' need not be linear as shown in Fig. 25F. Finally, Fig. 25G illustrates that head portion 152 may be concave and used in conjunction with base portion 162'.

Each of the foregoing embodiments of the protruding portion achieve the desired interlocking fit with its complementary receiving portion. Each embodiment achieves the desired aperture or gap formation by the same means, although the quality and characteristics of the formed gap or aperture will be different due to inherencies in the design. For example, tee shaped protruding portion 146 of Fig. 25C is much less likely to collapse back into its complementary receiving portion. However, the size of the resulting gap or aperture created by dislodgement of head portion 164 from receiving portion 168 is more likely to be collapsed by the exertion of external forces due to the nature and structural qualities of the foam forming the gap. Hence, while each gap formed will be self-sustaining, the structural properties of the surrounding material defining each gap will depend largely upon the type of interlock formed.

An additional embodiment worth noting is shown in an expanded state in Figs. 26A and 26B wherein head portion 164 is attached to receiving portion 168 via tether portion 176. As illustrated in Fig. 26A, tether portion 176 can be characterized as an essentially linear portion of foam or a buckled portion of foam as shown in Fig. 26B. In either embodiment, tether portion 176 connecting head portion 164 to receiving portion 168 prevents foam slab 130 from over-expanding when forces are applied thereto in order to dislodge the head portions from the receiving portions. Moreover, the additional lateral tensile forces imparted by tether portion 176 further urge head portion into interfering contact with second surface 172 to thereby assure a uniformly expanded slab 130, especially when large dimension slits are utilized or the slab undergoes further modifications which are dimensionally sensitive such as during manufacture of self-inflating air mattresses.

Another factor that influences the overall performance of foam slab 130 is the arrangement of slits 140. As is shown in Fig. 19, the columnar stagger of slits 140 can be a two row offset. Depending upon design considerations, a three row offset can be used, or an irregular offset pattern can be chosen. The two row offset in Fig. 19 advantageously permits lateral displacement of protruding portions 160 from their complementary receiving portions 168 because the foam is not linearly continuous in the direction of lateral displacement, as would be the case if there was no offset at all.

It is not necessary to have slits 140 depend entirely through slab 130. Figure 27A illustrates an embodiment wherein apertures or gaps 174' depend into, but not through, slab 130; Fig. 27B illustrates a similar embodiment wherein apertures or gaps 174' are formed in only one side of slab 130. Such embodiments may be useful in situations where thermal transmission is a significant concern or the slab must be bent easily and stay in the bent position. Alternatively, expanded slab 130 having apertures or gaps 174 can be bonded to solid slab 130' as is shown best in Fig. 27C to achieve a structure similar to that shown in Fig. 27B, Finally, two slit slabs can be stacked in an offset manner to produce a product similar to that shown in Fig. 27C in that apertures or gaps 174 do not generally depend entirely through the combined slab, but wherein both slabs are expanded. This embodiment is best shown in the plan view of Fig. 27D.

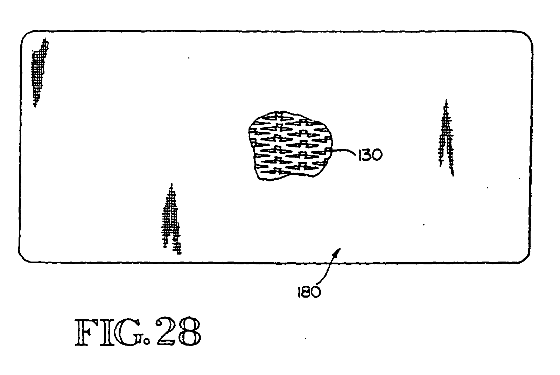

Lastly, the invention is exceptionally suited for applications that require compressional resiliency and adequate tensile strength, as well as light weight. Fig. 28 shows the invention being incorporated into a self-inflating, sealable mattress 180 commonly sold as the Therm-a-Rest camping mattress (TAR). A detailed explanation of the technology behind the TAR can be found in United States Patent number 4,624,877, which is incorporated herein by reference.

Substitution of slabs 130 for a solid, non-slit foam slab beneficially reduces compressional stiffness, weight, and density, while enhancing its compactibility and only slightly decreasing its tensile strength. For example, by substituting slit slabs, a 13 inch (33.02cm) wide slab can be expanded to 20 inches (50.8cm) for use in 20 inch (50.8cm) wide mattress applications. Consequently, the amount of foam material necessary to produce the mattress is decreased which advantageously results in a lighter mattress. It should be noted that the slab's tensile strength is reduced by about 30% in the embodiment shown in Fig. 20 when used in the embodiment of Fig. 28. This reduction in tensile strength, however, does not prevent slab 130 from being used in a TAR mattress since the reduction is within the TAR tolerance limits.

The slit orientation relative to mattress 180 in Fig. 28 is in the longitudinal direction, as opposed to the lateral direction, to provide self-inflation performance comparable to non-slit pad mattresses. Initial tests have shown that when the slits are laterally oriented, the self-inflation times are increased by approximately 350%. Initial tests also indicate that the overall insulative value for mattress 180 is within the range for a conventional TAR mattress. Moreover, the inherent collapse of the apertures or gaps in mattress 180 when subject to sufficient compressional forces as described during the discussion of Fig. 21A will permit mattress 180 to maintain a satisfactory insulative rating when in use. And, because foam material extends from one major surface to the other (except of course in the areas occupied by the apertures or gaps), these areas of foam material retain adequate tensile element aspects required in the TAR technology.

## Claims

1. An expanded resilient product comprising:
a geometric solid of resilient material defining a plurality of slits (30, 140) wherein each slit (30, 140) is bounded by a first inner surface (170) characterized as having at least one protruding portion (160) and a base portion (162), and a second inner surface (172) having a recess portion (168) and a base portion (162) complementary to the first inner surface (170), and wherein the plurality of slits (30, 140) depend in a first direction from a common surface of the material thereinto, and whereby upon the application of force sufficient to dislodge the protruding portion (160) of the first inner surface (170) from the complementary recess (172) of the second inner surface (172), a plurality of self-sustaining gaps or apertures will result from the contact of the protruding portion (160) of the first inner surface (170) against the base portion (162) of the second inner surface (172).

2. The resilient product of claim 1, wherein the protruding portion of the first inner surface (170) is connected to the base portion (162) of the first inner surface (170) by a return portion (166).

3. The resilient product of claims 1 or 2, wherein the protruding portion (160) of the first inner surface (170) forms an interlocking physical fit with the complementary recess portion (168) of the second inner surface (172).

4. The resilient product of claims 1, 2 or 3, wherein the protruding portion (160) is characterized as having a linear head portion (164).

5. The resilient product of claims 1, 2 or 3, further comprising a tether portion connected at a first end to the first inner surface (170) and connected at a second end to the second inner surface (172).

6. The resilient product of claim 3, wherein the return portion (166) is characterized as being substantially curved.

7. The resilient product of claims 1, 2 or 3, wherein the base portion (162) of the first inner surface (170) is substantially linear.

8. The resilient product of claims 1, 2 or 3, wherein the base portion (162) of the first inner surface (170) is substantially non-linear.

9. The resilient product of any preceding claim, wherein the resilient material has a first and second major surface bounded by a perimeter surface.

10. The resilient product of claim 9, wherein the first major surface is substantially planar.

11. The resilient product of claim 9, wherein the first major surface is substantially parallel with the second major surface.

12. The resilient product of claims 1, 2 or 3, wherein the resilient material has a uniform density prior to creation of the self-sustaining gaps or apertures (174).

13. The resilient product of claims 1, 2 or 3, wherein the longitudinal length of the slit (30, 140) is approximately 6.3 cm.

14. The resilient product of claims 1, 2 or 3, wherein the plurality of slits (30, 140) are arranged in a repeating pattern.

15. The resilient product of claim 14, wherein the repeating pattern comprises a first row of slits (30, 140) in columnar registry with a third and succeeding odd row of slits (30, 140), and a second row of slits (30, 140) in columnar registry with a fourth and succeeding even row of slits (30, 140) so as to create an offset of staggered pattern.

16. The resilient product of claim 14, wherein the repeating pattern comprises a first row of slits (30, 140) in columnar registry with at least another row of slits 1+3n, a second row of slits (30, 140) in columnar registry with at least another row of slits 2+3n, and a third row of slits (30, 140) in columnar registry with at least another row of slits 3+3n wherein n is an integer so as to create an offset or staggered pattern.

17. The resilient product of claim 9, wherein at least a portion of the apertures or gaps (174) extends from the first major surface to the second major surface.

18. The resilient product of claim 9, wherein the apertures of gaps (174) extend from the first major surface but do not reach to the second major surface.

19. The resilient product of any preceding claim, wherein the geometric solid of resilient material has a major and minor axis and the at least one protruding portion (160) is connected to he base portion (162) by a return portion (166), wherein the protruding portion (160) is dimensionally larger than the return portion (166), and the second inner surface (172) has a recess portion (172) and a base portion (162) complementary to the first surface (170) so as to create an interlocking fit between the first inner surface (170) and the second inner surface (172).

20. The resilient product of any preceding claim, further comprising a fluid impervious membrane bonded to the resilient product to form a sealed cavity containing the resilient product and a valve associated with the membrane to permit the selective ingress and egress of fluid into and out of the cavity.

21. The resilient product of claim 20, wherein the longitudinal direction of the slits (30, 140) are substantially parallel to the major axis of the slab (130).

22. A method for creating an expandable resilient product comprising:
(a) creating a plurality of slits (30, 140) in a geometric solid of resilient material wherein each slit (30, 140) is defined by a first inner surface (170) having a protruding portion (160) and a base portion (162), and a second inner surface (172) having a recess portion (172) and a base portion (162) complementary to the first inner surface (170) so as to create an interlocking fit between the first inner surface (170) and the second inner surface (172), and wherein the plurality of slits (30, 140) depend in a first direction from a first major surface of the material thereinto;
(b) applying force to the material sufficient to dislodge at least one protruding portion (160) from its complementary recess portion (172); and
(c) permitting the at least one protruding portion (160) of the first inner surface (170) to compressionally contact a portion of the second inner surface (172) to thereby define at least one self-sustaining gap (174).

23. The method for creating the expandable resilient product of claim 22, wherein the creation of the plurality of slits (30, 140) comprises the application of means for breaking the continuity of the product.

24. The method for creating the expandable resilient product of claim 23, wherein the means for breaking the continuity of the product is chosen from the group consisting of compressively applying a cutting die having a plurality of cutting elements associated therewith; applying a laser cutter; applying a fluid cutter; and applying a saw.

25. The method of claims 22, 23 or 24, wherein the solid resilient material has a second major surface in general opposition to the first major surface, and is bounded by a perimeter surface and further comprising fixedly attaching the expanded material to at least one substantially planar material.

26. The method of claim 25, wherein the plurality of slits (30, 140) extend from the first major surface towards the second major surface and the substantially planar material is attached to the first major surface.

27. The method of claim 26, wherein the plurality of. slits extend from the first major surface to the second major surface.

28. The method of claims 25, 26 or 27, further comprising fixedly attaching a second substantially planar material to the second major surface, attaching the first and second planar materials together to form an envelope wholly surrounding the expanded material, and positioning a valve intermediate the environment and the void defined by the envelope to permit ingress and egress of air therein and therefrom.

## Patentansprüche

1. Elastisches Expansionserzeugnis mit:
einem geometrischen Feststoff aus einem elastischen Material, der eine Vielzahl an Schlitzen (30, 140) definiert, wobei jeder Schlitz (30, 140) mit einer ersten inneren Fläche (170), die **dadurch gekennzeichnet ist, dass** sie zumindest einen vorragenden Abschnitt (170) und einen Basisabschnitt (162) hat, und einer zweiten inneren Fläche (172) verbunden ist, die einen Vertiefungsabschnitt (168) und einen Basisabschnitt (162) komplementär zu der ersten inneren Fläche (170) hat, und wobei die Vielzahl an Schlitzen (30, 140) in einer ersten Richtung von einer gemeinsamen Fläche des Materials darin abhängen, und wobei bei Aufbringen einer Kraft, die ausreichend zum Versetzen des vorragenden Abschnittes (160) der ersten inneren Fläche (170) von der komplementären Vertiefung (172) der zweiten inneren Fläche (172) ist, eine Vielzahl an sich selbst haltenden Zwischenräumen oder Öffnungen sich aus dem Kontakt des vorragenden Abschnittes (160) der ersten inneren Fläche (170) an dem Basisabschnitt (162) der zweiten inneren Fläche (172) ergibt.

2. Elastisches Erzeugnis gemäß Anspruch 1, wobei
der vorragende Abschnitt der ersten inneren Fläche (170) mit dem Basisabschnitt (162) der ersten inneren Fläche (170) durch einen Umkehrabschnitt (166) in Verbindung steht.

3. Elastisches Erzeugnis gemäß Anspruch 1 oder 2, wobei
der vorragende Abschnitt (160) der ersten inneren Fläche (170) einen physikalischen Sperrsitz mit dem komplementären Vertiefungsabschnitt (168) der zweiten inneren Fläche (172) ausbildet.

4. Elastisches Erzeugnis gemäß den Ansprüchen 1, 2 oder 3, wobei
der vorragende Abschnitt (160) **dadurch gekennzeichnet ist, dass** er einen linearen Kopfabschnitt (164) hat.

5. Elastisches Erzeugnis gemäß einem der Ansprüche 1, 2 oder 3, das des weiteren einen Halteabschnitt aufweist, von dem ein ersten Ende mit der ersten inneren Fläche (170) verbunden ist und von dem ein zweites Ende mit der zweiten inneren Fläche (172) verbunden ist.

6. Elastisches Erzeugnis gemäß Anspruch 3, wobei
der Umkehrabschnitt (166) so gekennzeichnet ist, dass er im wesentlichen gekrümmt ist.

7. Elastisches Erzeugnis gemäß einem der Ansprüche 1, 2 oder 3, wobei
der Basisabschnitt (162) der ersten inneren Fläche (170) im wesentlichen linear ist.

8. Elastisches Erzeugnis gemäß einem der Ansprüche 1, 2 oder 3, wobei
der Basisabschnitt (162) der ersten inneren Fläche (170) im wesentlichen nicht linear ist.

9. Elastisches Erzeugnis gemäß einem der vorherigen Ansprüche, wobei
das elastische Material eine erste und eine zweite Hauptfläche hat, die durch eine Randfläche verbunden sind.

10. Elastisches Erzeugnis gemäß Anspruch 9, wobei
die erste Hauptfläche im wesentlichen eben ist.

11. Elastisches Erzeugnis gemäß Anspruch 9, wobei
die erste Hauptfläche im wesentlichen parallel zu der zweiten Hauptfläche ist.

12. Elastisches Erzeugnis gemäß einem der Ansprüche 1, 2 oder 3, wobei
das elastische Material eine gleichmäßige Dichte vor der Erzeugung der selbst haltenden Zwischenräume oder Öffnungen (174) hat.

13. Elastisches Erzeugnis gemäß einem der Ansprüche 1, 2 oder 3, wobei
die Länge des Schlitzes (30, 140) in Längsrichtung ungefähr 6,3 cm beträgt.

14. Elastisches Erzeugnis gemäß einem der Ansprüche 1, 2 oder 3, wobei
die Vielzahl an Schlitzen (30, 140) in einem sich wiederholenden Muster angeordnet ist.

15. Elastisches Erzeugnis gemäß Anspruch 14, wobei
das sich wiederholende Muster eine erste Reihe an Schlitzen (30, 140) in einer spaltenartigen Ausrichtung mit einer dritten und darauf folgenden ungeraden Reihe an Schlitzen (30, 140) und eine zweite Reihe an Schlitzen (30, 140) in einer spaltenartigen Ausrichtung mit einer vierten und darauf folgenden geradzahligen Reihe an Schlitzen (30, 140) so aufweist, dass ein Versatz eines versetzten Musters erzeugt wird.

16. Elastisches Erzeugnis gemäß Anspruch 14, wobei
das sich wiederholende Muster eine erste Reihe an Schlitzen (30, 140) in spaltenartiger Ausrichtung mit zumindest einer anderen Reihe an Schlitzen 1+3n, eine zweite Reihe an Schlitzen (30, 140) in spaltenartiger Ausrichtung mit zumindest einer anderen Reihe an Schlitzen 2+3n und einer dritten Reihe an Schlitzen (30, 140) in einer spaltenartigen Ausrichtung mit zumindest einer anderen Reihe an Schlitzen 3+3n aufweist, wobei n eine ganze Zahl ist, um so einen Versatz oder ein versetztes Muster zu erzeugen.

17. Elastisches Erzeugnis gemäß Anspruch 9, wobei
zumindest ein Abschnitt der Öffnungen oder Zwischenräume (174) sich von der ersten Hauptfläche zu der zweiten Hauptfläche erstreckt.

18. Elastisches Erzeugnis gemäß Anspruch 9, wobei
die Öffnungen der Zwischenräume (174) sich von der ersten Hauptfläche erstrecken, aber nicht bis zu der zweiten Hauptfläche reichen.

19. Elastisches Erzeugnis gemäß einem der vorherigen Ansprüche, wobei
der geometrische Feststoff aus dem elastischen Material eine Hauptachse und eine Nebenachse hat und der zumindest eine vorragende Abschnitt (160) mit dem Basisabschnitt (162) durch einen Umkehrabschnitt (166) verbunden ist, wobei der vorragende Abschnitt (160) maßlich größer als der Umkehrabschnitt (166) ist, und die zweite innere Fläche (172) einen Vertiefungsabschnitt (172) und einen Basisabschnitt (162) komplementär zu der ersten Fläche (170) so hat, dass ein Sperrsitz zwischen der ersten inneren Fläche (170) und der zweiten inneren Fläche (172) erzeugt wird.

20. Elastisches Erzeugnis gemäß einem der vorherigen Ansprüche, das des weiteren eine gegenüber Fluid undurchlässige Membran aufweist, die mit dem elastischen Erzeugnis verbunden ist, um eine abgedichtete Aushöhlung auszubilden, die das elastische Erzeugnis und ein Ventil enthält, das zu der Membran zugehörig ist, um das wahlweise Eintreten und Austreten des Fluids in die Aushöhlung und aus der Aushöhlung zu ermöglichen.

21. Elastisches Erzeugnis gemäß Anspruch 20, wobei
die Längsrichtung der Schlitze (30, 140) im wesentlichen parallel zu der Hauptachse der Platte (130) ist.

22. Verfahren zum Erzeugen eines expansionsfähigen elastischen Erzeugnisses mit:
(a) Erzeugen einer Vielzahl an Schlitzen (30, 140) in einem geometrischen Feststoff aus einem elastischen Material, wobei jeder Schlitz (30, 140) durch eine erste innere Fläche (170) mit einem vorragenden Abschnitt (160) und einem Basisabschnitt (162) und durch eine zweite innere Fläche (172) mit einem Vertiefungsabschnitt (172) und einem Basisabschnitt (162) komplementär zu der ersten inneren Fläche (170) so definiert ist, dass ein Sperrsitz zwischen der ersten inneren Fläche (170) und der zweiten inneren Fläche (172) erzeugt wird, und wobei die Vielzahl an Schlitzen (30, 140) einer ersten Richtung von einer ersten Hauptfläche des Materials darin abhängig sind;
(b) Aufbringen einer Kraft auf das Material in ausreichender Weise, um zumindest einen vorragenden Abschnitt (160) aus seinem komplementären Vertiefungsabschnitt (172) zu entfernen; und
(c) Ermöglichen, dass der zumindest eine vorragende Abschnitt (160) der ersten inneren Fläche (170) unter Kompression mit einem Abschnitt der zweiten inneren Fläche (172) in Kontakt gelangt, um dadurch zumindest einen selbst haltenden Zwischenraum (174) zu definieren.

23. Verfahren zum Erzeugen eines expansionsfähigen elastischen Erzeugnisses gemäß Anspruch 22, wobei
das Erzeugen der Vielzahl an Schlitzen (30, 140) das Anwenden einer Einrichtung zum Aufbrechen der Stetigkeit des Erzeugnisses aufweist.

24. Verfahren zum Erzeugen eines expansionsfähigen elastischen Erzeugnisses gemäß Anspruch 23, wobei
die Einrichtung zum Aufbrechen der Stetigkeit des Erzeugnisses aus der Gruppe gewählt wird, die aus Folgendem besteht: unter Kompression bewirktes Anwenden eines Schneidwerkzeuges mit einer Vielzahl an zu diesem zugehörigen Schneidelementen; Anwenden einer Laserschneideinrichtung; Anwenden einer Fluidschneideinrichtung; und Anwenden einer Säge.

25. Verfahren gemäß einem der Ansprüche 22, 23 oder 24, wobei
das elastische Feststoffmaterial eine zweite Hauptfläche im allgemeinen in Gegenüberlage zu der ersten Hauptfläche hat und durch eine Randfläche verbunden ist und des weiteren fest angebracht das expandierte Material an zumindest einem im wesentlichen ebenen Material aufweist.

26. Verfahren gemäß Anspruch 25, wobei
die Vielzahl an Schlitzen (30, 140) sich von der ersten Hauptfläche zu der zweiten Hauptfläche erstreckt und das im wesentlichen ebene Material an der ersten Hauptfläche angebracht ist.

27. Verfahren gemäß Anspruch 26, wobei
die Vielzahl an Schlitzen sich von der ersten Hauptfläche zu der zweiten Hauptfläche erstreckt.

28. Verfahren gemäß Anspruch 25, 26 oder 27, das des weiteren die folgenden Schritte aufweist:
Festes Anbringen eines zweiten im wesentlichen ebenen Materials an der zweiten Hauptfläche,
Befestigen des ersten und des zweiten ebenen Materials aneinander zum Ausbilden einer Umhüllung, die gänzlich das expandierte Material umgibt, und
Positionieren eines Ventils zwischen der Umgebung und der Leerstelle, die durch die Umhüllung definiert ist, um ein Eintreten und Austreten der Luft in diese hinein und aus dieser heraus zu ermöglichen.

## Revendications

1. Produit résilient expansé comprenant :
un volume géométrique de matériau résilient définissant une pluralité de fentes (30, 140) dans lequel chaque fente (30, 140) est limitée par une première surface interne (170) caractérisée comme ayant au moins une partie saillante (160) et une partie base (162), et une seconde surface interne (172) ayant une partie renfoncement (168) et une partie base (162) complémentaire de la première surface interne (170), dans lequel la pluralité de fentes (30, 140) dépend, dans une première direction, d'une surface commune du matériau à l'intérieur et, dans lequel, sur application d'une force suffisante pour déloger la partie saillante (160) de la première surface interne (170) opposée au renfoncement complémentaire (172) de la seconde surface interne (172), une pluralité d'intervalles ou ouvertures auto-porteurs résulteront du contact de la partie saillante (160) de la première surface interne (170) avec la partie base (162) de la seconde surface interne (172).

2. Produit résilient selon la revendication 1, dans lequel la partie saillante (160) de la première surface interne (170) est reliée à la partie base (162) de la première surface interne (170) par une partie retour (166).

3. Produit résilient selon la revendication 1 ou 2, dans lequel la partie saillante de la première surface interne (170) forme un ajustage physique bloquant avec la partie renfoncement complémentaire (168) de la seconde surface interne (172).

4. Produit résilient selon la revendication 1 ou 2, dans lequel la partie saillante (160) est **caractérisée en ce qu'**elle a une partie de tête linéaire (164).

5. Produit résilient selon la revendication 1, 2 ou 3, comprenant en outre une partie liaison reliée, à une première extrémité, à la première surface interne (170)) et reliée, à une seconde extrémité, à la seconde surface interne (172).

6. Produit résilient selon la revendication 3, dans lequel la partie retour (166) est **caractérisée en ce qu'**elle est sensiblement incurvée.

7. Produit résilient selon la revendication 1, 2 ou 3 dans lequel la partie base (162) de la première surface interne (170) est sensiblement linéaire.

8. Produit résilient selon la revendication 1, 2 ou 3, dans lequel la partie base (162) de la première surface interne (170) est sensiblement non linéaire.

9. Produit résilient selon l'une quelconque des revendications précédentes, dans lequel le matériau résilient a une première et une seconde surfaces majeures limitées par une surface périmétrique.

10. Produit résilient selon la revendication 9, dans lequel la première surface majeure est sensiblement planaire.

11. Produit résilient selon la revendication 9, dans lequel la première surface majeure'est sensiblement parallèle à la seconde surface majeure.

12. Produit résilient selon la revendication 1, 2 ou 3, dans lequel le matériau résilient a une densité uniforme avant la création des intervalles ou ouvertures auto-porteurs (174).

13. Produit résilient selon la revendication 1, 2 ou 3, dans lequel la longueur longitudinale de la fente (30, 140) est d'environ 6,3 cm.

14. Produit résilient selon la revendication 1, 2 ou 3, dans lequel la pluralité de fentes (30, 140) est disposée selon un motif répétitif.

15. Produit résilient selon la revendication 14, dans lequel le motif répétitif comprend une première rangée de fentes (30, 140) disposées en colonne avec une troisième rangée de fentes impaires et les suivantes (30, 140), et une seconde rangée de fentes (30, 140) disposées en colonne avec une quatrième rangée de fentes paires et les suivantes (30, 140), pour créer un motif décalé ou en quinconce.

16. Produit résilient selon la revendication 14, dans lequel le motif répétitif comprend une première rangée de fentes (30,140) disposées en colonne avec au moins une autre rangée de fentes 1+3n, une seconde rangée de fentes (30, 140) disposées en colonne avec au moins une autre rangée de fentes 2+3n, et une troisième rangée de fentes (30, 140) disposées en colonne avec au moins une autre rangée de fentes 3+3n, dans lequel n est un entier afin de créer un motif décalé ou en quinconce.

17. Produit résilient selon la revendication 9, dans lequel au moins une partie des ouvertures ou intervalles (174) s'étend entre la première surface majeure et la seconde surface majeure.

18. Produit résilient selon la revendication 9, dans lequel les ouvertures ou intervalles (174) s'étendent depuis la première surface majeure mais sans atteindre la seconde surface majeure.

19. Produit résilient selon l'une quelconque des revendications précédentes, dans lequel le volume géométrique de matériau résilient a un axe majeur et un axe mineur et la au moins une partie saillante (160) est reliée à la partie base (162) par une partie retour (166), dans lequel la partie saillante (160) a des dimensions supérieures à la partie retour (166), et la seconde surface interne (172) a une partie renfoncement (172) et une partie base (162) complémentaires de la première surface (170) de façon à créer un ajustage bloquant entre la première surface interne (170) et la seconde surface interne (172).

20. Produit résilient selon l'une quelconque des revendications précédentes, comprenant en outre une membrane imperméable liée au produit résilient afin de former une cavité étanche contenant le produit résilient et une soupape associée à la membrane pour permettre l'entrée et la sortie sélectives de fluide dans et hors de la cavité.

21. Produit résilient selon la revendication 20, dans lequel la direction longitudinale des fentes (30, 140) est sensiblement parallèle à l'axe majeur du bloc (130).

22. Procédé de création d'un produit résilient expansible, comprenant :
(a) la création d'une pluralité de fentes (30, 140) dans un volume géométrique de matériau résilient dans lequel chaque fente (30,140) est définie par une première surface interne (170) ayant une partie saillante (160) et une partie base (162), et une seconde surface interne (172) ayant une partie renfoncement (172) et une partie base (162) complémentaire de la première surface interne (170) afin de créer un ajustage bloquant entre la première surface interne (170) et la seconde surface interne (172), et dans lequel la pluralité de fentes (30, 140) dépend dans une première direction de la première surface majeure du matériau à l'intérieur ;
(b) l'application au matériau d'une force suffisante pour déloger au moins la partie saillante (160) de la partie renfoncement complémentaire (172) ; et
(c) l'acheminement de la au moins une partie saillante (160) de la première surface interne (170) pour venir au contact par compression d'une partie de la seconde surface interne (172) pour définir ainsi au moins un intervalle auto-porteur (174).

23. Procédé de création d'un produit résilient expansible selon la revendication 22, dans lequel la création de la pluralité de fentes (30, 140) comprend l'application d'un moyen pour rompre la continuité du produit.

24. Procédé de création d'un produit résilient expansible selon la revendication 23, dans lequel le moyen pour rompre la continuité du produit est choisi dans un groupe consistant à appliquer par compression une matrice de découpage ayant une pluralité d'éléments de découpage associée à celle-ci ; à appliquer un dispositif de découpage au laser ; à appliquer un système de découpage liquide ; et à appliquer une scie.

25. Procédé selon les revendications 22, 23 et 24, dans lequel le matériau résilient solide a une seconde surface majeure globalement opposée à la première surface majeure, est limité par une surface périmétrique et comprend également la fixation du matériau expansible à au moins un matériau sensiblement planaire.

26. Procédé selon la revendication 25, dans lequel la pluralité de fentes (30, 140) s'étend de la première surface majeure à la seconde surface majeure et le matériau sensiblement planaire est fixé à la première surface majeure.

27. Procédé selon la revendication 26, dans lequel la pluralité de fentes s'étend de la première surface majeure à la seconde surface majeure.

28. Procédé selon les revendications 25, 26 et 27, comprenant également la fixation d'un second matériau sensiblement planaire à la seconde surface majeure, la fixation ensemble des premier et second matériaux planaires pour former une enveloppe entourant la totalité du matériau expansé, et la mise en place d'une soupape intermédiaire entre l'environnement et le vide défini par l'enveloppe pour permettre l'entrée et la sortie d'air vers l'intérieur et l'extérieur de celle-ci.
